# EUROPÄISCHE PATENTSCHRIFT

(11) **EP 1 890 167 B1**
(45) Veröffentlichungstag und Bekanntmachung des Hinweises auf die Patenterteilung: **22.04.2009**
(21) Anmeldenummer: 06017145.1
(22) Anmeldetag: 17.08.2006
(51) Int. Cl.: G01S 7/497

(54) **Verfahren und Vorrichtung zum Kalibrieren eines gepulsten Systems**
Method and device for calibrating a pulsed system
Procédé et dispositif de calibration d'un système à impulsion

(43) Veröffentlichungstag der Anmeldung: 20.02.2008
(73) Patentinhaber: Delphi Technologies, Inc., Troy, Michigan 48007 (US)
(72) Erfinder: Freese, Wolfgang J.F., Dr., 51789 Lindlar (DE)
(74) Vertreter: Denton, Michael John

(56) Entgegenhaltungen:
- EP-A- 1 074 854
- US-A- 4 451 146

## Beschreibung

Die Erfindung betrifft ein Verfahren zum Kalibrieren eines einen Sender zum Aussenden von Impulsen und einem Empfänger für den Empfang von Impulsen umfassenden gepulsten Systems, das im Betrieb insbesondere umfeldbedingten Einflussgrößen ausgesetzt ist, bei dem zur Simulation wenigstens einer Einflussgröße über variable Einstellmittel unterschiedliche Werte der Einflussgröße eingestellt und mittels des Empfängers die sich für die eingestellten unterschiedlichen Werte der Einflussgröße ergebenden Empfangswerte gemessen werden. Sie betrifft ferner eine Vorrichtung gemäß dem des Anspruch 23. Ein Verfahren der vorstehend genannten Art ist aus dem US 4,451,146 bekannt.

Bei gepulsten Systemen mit einem Impulse erzeugenden Sender und einem Impulse empfangenden Empfänger kann sich durch insbesondere umfeldbedingte Einflussgrößen der Arbeitspunkt verschieben, wodurch sich auch das Empfangssignal ändern kann. In der Regel besitzt der Empfänger des gepulsten Systems keine lineare Kennlinie. Mit einer Kalibration soll soweit wie möglich sichergestellt werden, dass eine unerwünschte Änderung des Empfangssignals, die durch eine insbesondere durch Störgrößen usw. bedingte Änderung des Arbeitspunktes hervorgerufen wird, kompensiert werden kann.

Beispielsweise bei auf der IR (Infrarot)-Technologie basierenden Innenraumschutzsensoren muss eine Kalibriermessung durchgeführt werden, deren Ergebnis, das beispielsweise eine Tabelle von etwa 2000 konstanten Werten umfassen kann, zur Linearisierung der Antwortkurve des zugeordneten Verstärkers herangezogen werden kann. Die Messung kann beispielsweise mittels eines Kastens erfolgen, der durch eine gleichzeitig als Blende dienende Trennwand unterteilt und mit einer Lichtquelle, beispielsweise einer Glühlampe oder dergleichen, versehen ist. Die Trennwand bzw. Blende kann zur Begrenzung der Menge an vom Sender stammendem Licht, die vom beispielsweise durch Fotodioden gebildeten Empfänger des IR-Sensors bei aktivierter Lichtquelle empfangen wird, entsprechend verlagert werden. Über diese Blende können demzufolge unterschiedliche Innenraum-Reflexionsgrade von Fahrzeugen simuliert werden. Die Intensität der Lichtquelle kann eingestellt werden, um die Hintergrund-Lichtintensität beispielsweise in solchen Situationen wie bewölktem Himmel, hellem Sonnenschein, Dunkelheit oder Nacht, usw. zu simulieren.

Sowohl die Blende als auch die Lichtquelle werden über eine PC-Software oder eine entsprechend programmierte elektronische Steuer- und/oder Regeleinrichtung angesteuert.

Bei den bisher üblichen Verfahren und Vorrichtungen werden über die PC-Software bzw. die betreffende elektronische Steuer- und/oder Regeleinrichtung die Blende und die Lichtquelle auf Zielwerte eingestellt, die kontinuierlich durch den Sensor gemessen werden. Anders ausgedrückt erfolgt über die PC-Software und den Sensor eine automatische Steuerung oder Regelung. Bei Erreichen der Zielwerte wird der Kalibrierwert für diese eine Einstellung über den Sensor gemessen und über die PC-Software für eine weitere Auswertung gespeichert.

Ein solches Vorgehen ist nun aber sehr zeitaufwendig. So muss eine Tabelle von beispielsweise etwa 2000 Werten erstellt werden, und es müssen zumindest etwa 20 Sensoren kalibriert werden, um eine gute Statistik zu gewährleisten. Dafür waren zur Messung etwa zwei Wochen und zur Datenauswertung eine weitere Woche erforderlich.

Der Erfindung liegt die Aufgabe zugrunde, das Verfahren sowie die Vorrichtung der eingangs genannten Art zu verbessern und insbesondere dahingehend weiterzuentwickeln, dass die genannten Nachteile beseitigt sind.

Bezüglich des Verfahrens wird diese Aufgabe erfindungsgemäß dadurch gelöst, dass zur Einstellung der unterschiedlichen Werte der Einflussgröße die Einflussgröße über die variablen Einstellmittel jeweils nur soweit verstellt wird, bis ein jeweiliger Wert der Einflussgröße einem vorgebbaren Wert der Einflussgröße innerhalb einer vorgebbaren Toleranz entspricht, und dass den vorgebbaren Werten der Einflussgröße entsprechende Empfangswerte durch Interpolation der mittels des Empfänger gemessenen Empfangswerte entlang der eingestellten Werte der Einflussgröße ermittelt werden.

Im Unterschied zu den bekannten Verfahren werden die Werte der wenigstens einen Einflussgröße also nicht mehr jeweils bis zum Erreichen der exakten Zielwerte eingestellt. Vielmehr werden die jeweiligen Einstellvorgänge bereits dann beendet, wenn die betreffenden Zielwerte innerhalb einer vorgebbaren Toleranz erreicht sind. Dabei kann es sich beispielsweise um eine Toleranz von einigen wenigen Prozent handeln. Der jeweilige Toleranzbereich ist vorzugsweise vorgebbar. Die den vorgebbaren, vorzugsweise äquidistanten Werten der Einflussgröße entsprechenden Empfangswerte werden dann durch Interpolation der durch den Empfänger gemessenen Empfangswerte entlang der eingestellten Werte der Einflussgröße ermittelt. Der für das Erstellen der betreffenden Werte erforderliche Zeitaufwand wird dadurch beträchtlich reduziert.

Bevorzugt werden zumindest zwei unterschiedliche Einflussgrößen simuliert.

Dabei kann vorteilhafterweise so vorgegangen werden, dass zur Einstellung der unterschiedlichen Werte der beiden Einflussgrößen die Werte dieser Einflussgrößen über die variablen Einstellmittel jeweils nur soweit verstellt werden, bis ein jeweiliger Wert einer ersten der beiden Einflussgrößen einem vorgebbaren Wert dieser ersten Einflussgröße innerhalb einer vorgebbaren Toleranz bzw. ein jeweiliger Wert der zweiten Einflussgröße einem vorgebbaren Wert dieser zweiten Einflussgröße innerhalb einer vorgebbaren Toleranz entspricht, und dass den vorgebbaren Werten der beiden Einflussgrößen entsprechende Empfangswerte durch Interpolation der mittels des Empfänger gemessenen Empfangswerte entlang der eingestellten Werte der ersten Einflussgröße und entlang der eingestellten Werte der zweiten Einflussgröße ermittelt werden.

Wie bereits erwähnt, werden durch die Interpolation vorzugsweise Empfangswerte für äquidistante Werte einer jeweiligen Einflussgröße ermittelt.

Gemäß einer bevorzugten Ausgestaltung des erfindungsgemäßen Verfahrens erfolgt die Interpolation in Form einer Kubische-Spline-Interpolation.

Die Interpolation erfolgt bevorzugt in Form einer zweidimensionalen Interpolation.

Dabei wird zweckmäßigerweise entlang der eingestellten Werte einer jeweiligen Einflussgröße ausgehend von einem definierten Anfangswert der Einflussgröße interpoliert.

Insbesondere für die anschließende Interpolation werden die eingestellten Werte einer jeweiligen Einflussgröße zweckmäßigerweise zumindest zwischengespeichert, wobei bevorzugt auch die den eingestellten Werten einer jeweiligen Einflussgröße entsprechenden, mittels des Empfängers gemessenen Empfangswerte zumindest zwischengespeichert werden.

Die Interpolation kann dann vorteilhafterweise auf der Basis der zwischengespeicherten eingestellten Werte einer jeweiligen Einflussgröße und der diesen entsprechenden, mittels des Empfängers gemessenen zwischengespeicherten Empfangswerte erfolgen.

Eine bevorzugte praktische Ausgestaltung des erfindungsgemäßen Verfahrens zeichnet sich dadurch aus, dass das zu kalibrierende gepulste System durch ein einen IR-Sensor umfassendes Innenraumschutzsystem insbesondere für Fahrzeuge gebildet ist und über die variablen Einstellmittel zur Simulation von Innenraum-Reflexionsgraden und Hintergrund-Lichtintensitäten unterschiedliche Innenraum-Reflexionsgrade und unterschiedliche Hintergrund-Lichtintensitäten eingestellt und mittels des IR-Sensors die sich für die eingestellten unterschiedlichen Innenraum-Reflexionsgrade und Hintergrund-Lichtintensitäten ergebenden Lichtempfangswerte gemessen werden, wobei zur Einstellung der unterschiedlichen Innenraum-Reflexionsgrade und Hintergrund-Lichtintensitäten die Innenraum-Reflexionsgrade und Hintergrund-Lichtintensitäten über die variablen Einstellmittel jeweils nur soweit verstellt werden, bis ein jeweiliger Innenraum-Reflexionsgrad einem vorgebbaren Innenraum-Reflexionsgrad innerhalb einer vorgebbaren Toleranz bzw. eine jeweilige Hintergrund-Lichtintensität einer vorgebbaren Hintergrund-Lichtintensität innerhalb einer vorgebbaren Toleranz entspricht, und den vorgebbaren Innenraum-Reflexionsgraden und Hintergrund-Lichtintensitäten entsprechende Lichtempfangswerte durch Interpolation der mittels des IR-Sensors gemessenen Lichtempfangswerte entlang der eingestellten Innenraum-Reflexionsgrade und entlang der eingestellten Hintergrund-Lichtintensitäten ermittelt werden.

Im Unterschied zu den bekannten Verfahren werden die Innenraum-Reflexionsgrade und Hintergrund-Lichtintensitäten also nicht mehr jeweils bis zum Erreichen der exakten Zielwerte eingestellt. Vielmehr werden die jeweiligen Einstellvorgänge bereits dann beendet, wenn die betreffenden Zielwerte innerhalb einer vorgebbaren Toleranz erreicht sind. Dabei kann es sich beispielsweise um eine Toleranz von einigen wenigen Prozent handeln. Der jeweilige Toleranzbereich ist vorzugsweise vorgebbar. Die den vorgebbaren, vorzugsweise äquidistanten Innenraum-Reflexionsgraden und Hintergrund-Lichtintensitäten entsprechenden Lichtempfangswerte werden dann durch Interpolation der mittels des IR-Sensors gemessenen Lichtempfangswerte entlang der eingestellten Innenraum-Reflexionsgrade und entlang der eingestellten Hintergrund-Lichtintensitäten ermittelt. Der für das Erstellen der betreffenden Werte erforderliche Zeitaufwand wird dadurch beträchtlich reduziert.

Wie bereits erwähnt, werden durch die Interpolation vorzugsweise Lichtempfangswerte für äquidistante Innenraum-Reflexionsgrade und äquidistante Hintergrund-Lichtintensitäten ermittelt.

Gemäß einer bevorzugten Ausgestaltung des erfindungsgemäßen Verfahrens erfolgt die Interpolation wieder in Form einer Kubische-Spline-Interpolation.

Die Interpolation erfolgt bevorzugt auch wieder in Form einer zweidimensionalen Interpolation.

Dabei wird zweckmäßigerweise zunächst entlang der eingestellten Hintergrund-Lichtintensitäten und anschließend entlang der eingestellten Innenraum-Reflexionsgrade interpoliert.

Zweckmäßigerweise erfolgt die Interpolation entlang der eingestellten Innenraum-Reflexionsgrade ausgehend von einem definierten Anfangs-Innenraum-Reflexionsgrad.

Entsprechend kann die Interpolation entlang der eingestellten Hintergrund-Lichtintensitäten vorteilhafterweise ausgehend von einer definierten Anfangs-Hintergrund-Lichtintensität erfolgen.

Insbesondere für die anschließende Interpolation werden die eingestellten Innenraum-Reflexionsgrade zweckmäßigerweise zumindest zwischengespeichert, wobei bevorzugt auch die den eingestellten Innenraum-Reflexionsgraden entsprechenden, mittels des IR-Sensors gemessenen Lichtempfangswerte zumindest zwischengespeichert werden.

Entsprechend werden zur anschließenden Interpolation vorteilhafterweise auch die eingestellten Hintergrund-Lichtintensitäten zumindest zwischengespeichert, wobei bevorzugt entsprechend auch die den eingestellten Hintergrund-Lichtintensitäten entsprechenden, mittels des IR-Sensors gemessenen Lichtempfangswerte zumindest zwischengespeichert werden.

Die Interpolation kann dann vorteilhafterweise auf der Basis der zwischengespeicherten eingestellten Innenraum-Reflexionsgrade und Hintergrund-Lichtintensitäten und der diesen entsprechenden, mittels des IR-Sensors gemessenen zwischengespeicherten Lichtempfangswerte erfolgen.

Zur entsprechenden Simulation der Innenraum-Reflexionsgrade und Hintergrund-Lichtintensitäten kann, wie eingangs erwähnt, beispielsweise wieder ein Kasten verwendet werden, der durch eine Trennwand oder Blende unterteilt und mit einer Lichtquelle wie beispielsweise einer Glühlampe versehen ist. Der IR-Sensor kann innerhalb des Kastens beispielsweise im Bereich der Blende vorgesehen sein. Der beispielsweise durch Fotodioden gebildete Empfänger des IR-Sensors ist dann zweckmäßigerweise in dem die Lichtquelle bzw. Lampe aufweisenden Abschnitt der Kammer angeordnet. Die Innenraum-Reflexionsgrade können dann beispielsweise über die Blende und die Hintergrund-Lichtintensität beispielsweise über die Lichtquelle bzw. Lampe eingestellt werden.

Es kann dann beispielsweise bei jeweils konstant gehaltener Blendenposition über die verschiedenen Lampenintensitäten interpoliert werden, um für äquidistante Zielwerte der Lampenintensität die verschiedenen Lichtintensitäten zu bestimmen, die vom IR-Sensor bei Vorliegen der betreffenden Zielwerte empfangen worden wären. Anschließend kann dann bei konstant gehaltenen, vorzugsweise äquidistanten Lampenintensitäten über die verschiedenen Blendenpositionen interpoliert werden, um für äquidistante Zielwerte der Blendenpositionen die verschiedenen Lichtintensitäten zu bestimmen, die vom IR-Sensor bei vorliegenden Zielwerten der Blendenpositionen empfangen worden wären.

Im praktischen Einsatz eines jeweiligen IR-Sensors, beispielsweise in einem Fahrzeug, insbesondere Kraftfahrzeug, kann die aktuelle Reflexionsrate und Hintergrundhelligkeit gemessen und mit einem jeweiligen Bezugswert verglichen werden. Die entsprechende Kalibrierung kann dann auf der Basis der durch die erfindungsgemäße Interpolation gewonnenen Daten erfolgen.

Bezüglich der Vorrichtung wird die zuvor genannte Aufgabe erfindungsgemäß entsprechend dadurch gelöst, dass zur Einstellung der unterschiedlichen Werte der Einflussgröße die Einflussgröße über die variablen Einstellmittel jeweils nur soweit verstellt wird, bis ein jeweiliger Wert der Einflussgröße einem vorgebbaren Wert der Einflussgröße innerhalb einer vorgebbaren Toleranz entspricht, und dass eine insbesondere elektronische Auswerteeinrichtung vorgesehen ist, um den vorgebbaren Werten der Einflussgröße entsprechende Empfangswerte durch Interpolation der mittels des Empfängers gemessenen Empfangswerte entlang der eingestellten Werte der Einflussgrößen zu ermitteln.

Bevorzugte Ausführungsformen der erfindungsgemäßen Vorrichtung sind in den Unteransprüchen angegeben.

Weitere Merkmale und Vorteile des erfindungsgemäßen Verfahrens sowie der erfindungsgemäßen Vorrichtung ergeben sich aus den im Folgenden wiedergegebenen Ausführungsbeispielen.

Wie bereits erwähnt, kann zur Simulation der Innenraum-Reflexionsgrade und Hintergrund-Lichtintensitäten beispielsweise ein Kasten verwendet werden, der durch eine Trennwand oder Blende unterteilt ist und in dem eine Lichtquelle, beispielsweise eine Glühlampe oder dergleichen, angeordnet ist. Im Gegensatz zu den bekannten Verfahren und Vorrichtungen ist die betreffende Steuer- und/oder Regeleinrichtung über die betreffende Software, z.B. PC-Software, nicht mehr so programmiert, dass die Blende und die Lichtquelle so lange angesteuert werden, bis die exakten Zielwerte gemessen werden. Die Steuer- und/oder Regeleinrichtung bzw. die betreffende Software ist vielmehr dahingehend abgewandelt, dass die Einstellung der Blende und der Lichtquelle bereits beendet wird, wenn die Zielwerte mit einer gegebenen Toleranz von einigen wenigen Prozent gemessen wurden. Dabei ist die betreffende Toleranz bevorzugt vorgebbar oder einstellbar.

Der Vorteil des entsprechend abgewandelten erfindungsgemäßen Kalibrierverfahrens besteht darin, dass die für den Erhalt der Daten erforderliche Zeit erheblich reduziert wird. So waren bei einem praktischen Ausführungsbeispiel für die Messung sämtlicher etwa 2000 Daten eines einzigen Sensors lediglich etwa zwei Stunden erforderlich.

Das Problem bestand darin, dass die abzuleitende Wertetabelle äquidistante Werte für den Blendenzustand und den Zustand der Beleuchtungseinrichtung erfordert. Beim erfindungsgemäßen Kalibrierverfahren werden nun die Blende und die Lichtquelle nicht auf eine exakte Position bzw. eine exakte Intensität eingestellt. Es erfolgt vielmehr eine Interpolation der gemessenen Werte. Bevorzugt erfolgt die Interpolation in Form einer Kubische-Spline-Interpolation, um die Werte zu berechnen, die gemessen worden wären, wenn über die betreffende PC-Software sowohl die Blende als auch die Lichtquelle exakt auf den jeweiligen Zielzustand eingestellt worden wären.

Dazu erfolgt die Interpolation zweckmäßigerweise in Form einer zweidimensionalen Interpolation.

Da die Intensität der Lichtquelle schneller geändert werden kann als die Position der Blende oder Trennwand, können gemäß einer beispielhaften zweckmäßigen Ausgestaltung des erfindungsgemäßen Verfahrens beispielsweise die folgenden, insbesondere durch eine Software, vorzugsweise PC-Software bzw. eine entsprechend programmierte elektronische Steuer- und/oder Regeleinrichtung verwirklichte Verfahrensschritte vorgesehen sein:
1. Initialisierung; Einstellung der Intensität der Lichtquelle und der Position der Blende auf einen Anfangszustand.
2. Verstellen der aktuellen Blendenposition auf die nächste Zielposition innerhalb einer Toleranz von einigen wenigen Prozent; Speichern der aktuellen Position.
3. Verstellen der Intensität der Lichtquelle auf die nächste Zielintensität innerhalb einer Toleranz von einigen wenigen Prozent; Speichern der aktuellen Intensität.
4. Abfragen des aktuellen Kalibrierwerts vom Sensor und Speichern dieses Wertes.
5. In dem Fall, dass die Intensität der Lichtquelle über den gesamten Bereich verstellt wurde, gehe zum Verfahrensschritt 6, andernfalls gehe zurück zum Verfahrensschritt 3.
6. In dem Fall, dass die Position der Blende über den gesamten Bereich verstellt wurde, gehe zum Verfahrensschritt 7, andernfalls gehe zurück zum Verfahrensschritt 2.
7. Auswerten der Daten oder Werte.
8. Kalibrierung beendet.

Es erfolgt eine zweidimensionale Kubische-Spline-Interpolation, um die Werte zu berechnen, die gemessen worden wären, wenn alle Intensitäten der Lichtquelle und alle Positionen der Blende exakt eingestellt worden wären. Daher und aufgrund der soeben beschriebenen Kalibrierschritte muss zunächst entlang der Intensität der Lichtquelle interpoliert werden, um die Werte zu erhalten, die gemessen worden wären, wenn die Intensitäten exakt eingestellt gewesen wären. Anschließend muss entlang der Blendenposition interpoliert werden, um die Werte zu erhalten, die gemessen worden wären, wenn die Blendenpositionen exakt eingestellt worden wären.

Aus dem folgenden Grund würde eine umgekehrte Reihenfolge der Interpolationsschritte, d.h. zunächst eine Interpolation entlang der Blendenposition und anschließend eine Interpolation über die Intensität der Lichtquelle, nicht zu dem gewünschten Ergebnis führen:

Die gemessenen Werte sind gegeben durch eine m x n-Matrix mit m Intensitäten der Lichtquelle und n Blendenpositionen. Eine Interpolation entlang der Intensitäten der Lichtquelle bedeutet, dass die m Werte einer einzigen Zeile mit für jeden dieser Werte bekannter Intensität der Lichtquelle hergenommen werden, während die Blendenposition für alle Werte dieser Reihe konstant ist, und zwar aufgrund der oben beschriebenen Messschritte, wonach zuerst die Blende eingestellt und dann die Intensität der Lichtquelle verstellt wird. Würde man den Plan der Blendenpositionen interpolieren, so würde dies bedeuten, dass alle n Werte einer einzigen Spalte hergenommen und die Werte berechnet würden, die gemessen worden wären, wenn die Blendenpositionen exakt eingestellt gewesen wären. Das Problem hierbei ist, dass die Intensität nicht für alle Werte einer einzigen Spalte konstant ist, was auch auf die Messschritte zutrifft.

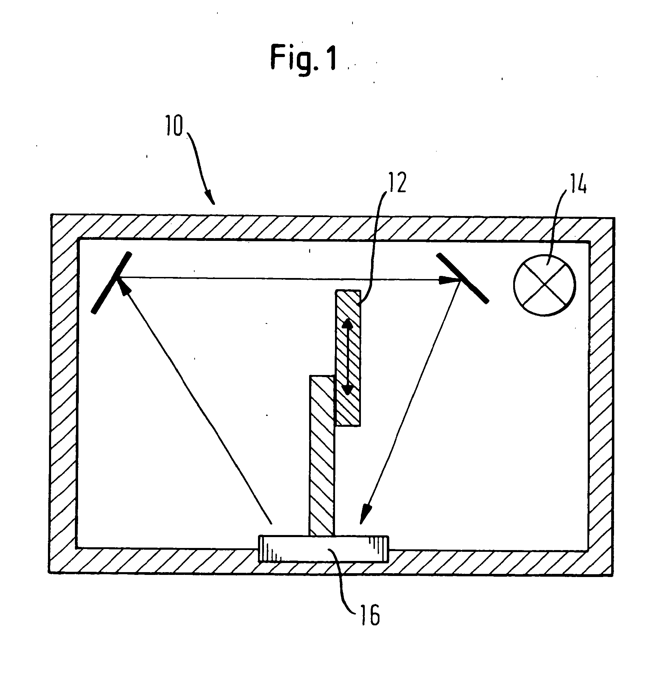

In der Figur 1 der Zeichnung ist in schematischer Darstellung eine beispielhafte Ausführungsform eines zur Simulation der Innenraum-Reflexionsgrade und Hintergrund-Lichtintensitäten verwendbaren Kastens 10 dargestellt.

Dieser Kasten 10 ist durch eine Trennwand oder Blende 12 unterteilt. In der rechten Hälfte des Kastens 10 ist eine Lichtquelle 14, beispielsweise eine Glühlampe oder dergleichen, angeordnet. Im unteren mittleren Bereichs des Kastens 10 ist ein IR-Sensor 16 vorgesehen. Die Trennwand bzw. Blende 12 kann zur Begrenzung der Menge an vom Sender beispielsweise des Sensors 16 stammendem Licht, die vom beispielsweise durch Photodioden gebildeten Empfänger des Sensors 16 bei aktivierter Lichtquelle empfangen wird, entsprechend verlagert werden. Über diese Blende 12 können demzufolge unterschiedliche Innenraum-Reflexionsgrade, beispielsweise von Fahrzeugen, simuliert werden. Die Intensität der Lichtquelle 14 kann eingestellt werden, um die Hintergrund-Lichtintensität beispielsweise in solchen Situationen wie bewölktem Himmel, hellem Sonnenschein, Dunkelheit oder Nacht usw. zu simulieren.

Sowohl die Blende 12 als auch die Lichtquelle 14 können über eine PC-Software bzw. eine entsprechend programmierte Steuer- und/oder Regeleinrichtung angesteuert werden.

Im Gegensatz zu den bekannten Verfahren und Vorrichtungen ist die betreffende Steuer- und/oder Regeleinrichtung über die betreffende Software, z.B. PC-Software, nicht mehr so programmiert, dass die Blende 12 und die Lichtquelle 14 so lange angesteuert werden, bis die exakten Zielwerte gemessen werden. Die hier nicht dargestellte Steuer- und/oder Regeleinrichtung bzw. die betreffende Software ist erfindungsgemäß vielmehr dahingehend abgewandelt, dass die Einstellung der Blende 12 und der Lichtquelle 14 bereits beendet wird, wenn die Zielwerte mit einer gegebenen Toleranz von einigen wenigen Prozent gemessen wurden.

Es können dann die interpolierten Werte für alle Messpunkte ermittelt werden. Es kann beispielsweise bei eingestellter Reflektivität die Intensität der Lichtquelle 14 (Hintergrundlicht) variiert werden, was zu Änderungen im Nutzsignal führt. Diese repräsentieren den unerwünschten Einfluss des Umfeldes auf das Nutzsignal, der schließlich kompensiert werden soll.

### Bezugszeichenliste

- 10: Kasten
- 12: Trennwand, Blende
- 14: Lichtquelle
- 16: IR-Sensor

## Patentansprüche

1. Verfahren zum Kalibrieren eines einen Sender zum Aussenden von Impulsen und einem Empfänger für den Empfang von Impulsen umfassenden gepulsten Systems, das im Betrieb insbesondere umfeldbedingten Einflussgrößen ausgesetzt ist, bei dem zur Simulation wenigstens einer Einflussgröße über variable Einstellmittel (12, 14) unterschiedliche Werte der Einflussgröße eingestellt und mittels des Empfängers die sich für die eingestellten unterschiedlichen Werte der Einflussgröße ergebenden Empfangswerte gemessen werden,
**dadurch gekennzeichnet,**
**dass** zur Einstellung der unterschiedlichen Werte der Einflussgröße die Einflussgröße über die variablen Einstellmittel (12, 14) jeweils nur soweit verstellt wird, bis ein jeweiliger Wert der Einflussgröße einem vorgebbaren Wert der Einflussgröße innerhalb einer vorgebbaren Toleranz entspricht, und dass den vorgebbaren Werten der Einflussgröße entsprechende Empfangswerte durch Interpolation der mittels des Empfänger gemessenen Empfangswerte entlang der eingestellten Werte der Einflussgröße ermittelt werden.

2. Verfahren nach Anspruch 1,
**dadurch gekennzeichnet,**
**dass** zumindest zwei unterschiedliche Einflussgrößen simuliert werden.

3. Verfahren nach Anspruch 2,
**dadurch gekennzeichnet,**
**dass** zur Einstellung der unterschiedlichen Werte der beiden Einflussgrößen die Werte dieser Einflussgrößen über die variablen Einstellmittel jeweils nur soweit verstellt werden, bis ein jeweiliger Wert einer ersten der beiden Einflussgrößen einem vorgebbaren Wert dieser ersten Einflussgröße innerhalb einer vorgebbaren Toleranz bzw. ein jeweiliger Wert der zweiten Einflussgröße einem vorgebbaren Wert dieser zweiten Einflussgröße innerhalb einer vorgebbaren Toleranz entspricht, und dass den vorgebbaren Werten der beiden Einflussgrößen entsprechende Empfangswerte durch Interpolation der mittels des Empfänger gemessenen Empfangswerte entlang der eingestellten Werte der ersten Einflussgröße und entlang der eingestellten Werte der zweiten Einflussgröße ermittelt werden.

4. Verfahren nach einem der vorhergehenden Ansprüche,
**dadurch gekennzeichnet,**
**dass** durch die Interpolation Empfangswerte für äquidistante Werte einer jeweiligen Einflussgröße ermittelt werden.

5. Verfahren nach einem der vorhergehenden Ansprüche,
**dadurch gekennzeichnet,**
**dass** die Interpolation in Form einer Kubische-Spline-Interpolation erfolgt.

6. Verfahren nach einem der vorhergehenden Ansprüche,
**dadurch gekennzeichnet,**
**dass** im Fall der Simulation zweier Einflussgrößen die Interpolation in Form einer zweidimensionalen Interpolation erfolgt.

7. Verfahren nach einem der vorhergehenden Ansprüche,
**dadurch gekennzeichnet,**
**dass** die Interpolation entlang der eingestellten Werte einer jeweiligen Einflussgröße ausgehend von einem definierten Anfangswert der Einflussgröße erfolgt.

8. Verfahren nach einem der vorhergehenden Ansprüche,
**dadurch gekennzeichnet,**
**dass** die eingestellten Werte einer jeweiligen Einflussgröße zumindest zwischengespeichert werden.

9. Verfahren nach Anspruch 8,
**dadurch gekennzeichnet,**
**dass** die den eingestellten Werten einer jeweiligen Einflussgröße entsprechenden, mittels des Empfängers gemessenen Empfangswerte zumindest zwischengespeichert werden.

10. Verfahren nach einem der vorhergehenden Ansprüche,
**dadurch gekennzeichnet,**
**dass** die Interpolation auf der Basis der zwischengespeicherten eingestellten Werte einer jeweiligen Einflussgröße und der diesen entsprechenden, mittels des Empfängers gemessenen zwischengespeicherten Empfangswerte erfolgt.

11. Verfahren nach einem der vorhergehenden Ansprüche,
**dadurch gekennzeichnet,**
**dass** das zu kalibrierende gepulste System durch ein einen IR-Sensor (16) umfassendes Innenraumschutzsystem insbesondere für Fahrzeuge gebildet ist und über die variablen Einstellmittel (12, 14) zur Simulation von Innenraum-Reflexionsgraden und Hintergrund-Lichtintensitäten unterschiedliche Innenraum-Reflexionsgrade und unterschiedliche Hintergrund-Lichtintensitäten eingestellt und mittels des IR-Sensors (16) die sich für die eingestellten unterschiedlichen Innenraum-Reflexionsgrade und Hintergrund-Lichtintensitäten ergebenden Lichtempfangswerte gemessen werden, wobei zur Einstellung der unterschiedlichen Innenraum-Reflexiorisgrade und Hintergrund-Lichtintensitäten die Innenraum-Reflexionsgrade und Hintergrund-Lichtintensitäten über die variablen Einstellmittel (12, 14) jeweils nur soweit verstellt werden, bis ,ein jeweiliger Innenraum-Reflexionsgrad einem vorgebbaren Innenraum-Reflexionsgrad innerhalb einer vorgebbaren Toleranz bzw. eine jeweilige Hintergrund-Lichtintensität einer vorgebbaren Hintergrund-Lichtintensität innerhalb einer vorgebbaren Toleranz entspricht, und den vorgebbaren Innenraum-Reflexionsgraden und Hintergrund-Lichtintensitäten entsprechende Lichtempfangswerte durch Interpolation der mittels des IR-Sensors (16) gemessenen Lichtempfangswerte entlang der eingestellten Innenraum-Reflexionsgrade und entlang der eingestellten Hintergrund-Lichtintensitäten ermittelt werden.

12. Verfahren nach Anspruch 11,
**dadurch gekennzeichnet,**
**dass** durch die Interpolation Lichtempfangswerte für äquidistante Innenraum-Reflexionsgrade und äquidistante Hintergrund-Lichtintensitäten ermittelt werden.

13. Verfahren nach Anspruch 11 oder 12,
**dadurch gekennzeichnet,**
**dass** die Interpolation in Form einer Kubische-Spline-Interpolation erfolgt.

14. Verfahren nach einem der Ansprüche 11 bis 13,
**dadurch gekennzeichnet,**
**dass** die Interpolation in Form einer zweidimensionalen Interpolation erfolgt.

15. Verfahren nach einem der Ansprüche 11 bis 14,
**dadurch gekennzeichnet,**
**dass** zunächst entlang der eingestellten Hintergrund-Lichtintensitäten und anschließend entlang der eingestellten Innenraum-Reflexionsgrade interpoliert wird.

16. Verfahren nach einem der Ansprüche 11 bis 15,
**dadurch gekennzeichnet,**
**dass** die Interpolation entlang der eingestellten Innenraum-Reflexionsgrade ausgehend von einem definierten Anfangs-Innenraum-Reflexionsgrad erfolgt.

17. Verfahren nach einem der Ansprüche 11 bis 16,
**dadurch gekennzeichnet,**
**dass** die Interpolation entlang der eingestellten Hintergrund-Lichtintensitäten ausgehend von einer definierten Anfangs-Hintergrund-Lichtintensität erfolgt.

18. Verfahren nach einem der Ansprüche 11 bis 17,
**dadurch gekennzeichnet,**
**dass** die eingestellten Innenraum-Reflexionsgrade zumindest zwischengespeichert werden.

19. Verfahren nach Anspruch 18,
**dadurch gekennzeichnet,**
**dass** die den eingestellten Innenraum-Reflexionsgraden entsprechenden, mittels des IR-Sensors (16) gemessenen Lichtempfangswerte zumindest zwischengespeichert werden.

20. Verfahren nach einem der vorhergehenden Ansprüche,
**dadurch gekennzeichnet,**
**dass** die eingestellten Hintergrund-Lichtintensitäten zumindest zwischengespeichert werden.

21. Verfahren nach Anspruch 20,
**dadurch gekennzeichnet,**
**dass** die den eingestellten Hintergrund-Lichtintensitäten entsprechenden, mittels des IR-Sensors gemessenen Lichtempfangswerte zumindest zwischengespeichert werden.

22. Verfahren nach einem der Ansprüche 11 bis 21,
**dadurch gekennzeichnet,**
**dass** die Interpolation auf der Basis der zwischengespeicherten eingestellten Innenraum-Reflexionsgrade und Hintergrund-Lichtintensitäten und der diesen entsprechenden, mittels des IR-Sensors (16) gemessenen zwischengespeicherten Lichtempfangswerte erfolgt.

23. Vorrichtung zum Kalibrieren eines einen Sender zum Aussenden von Impulsen und einem Empfänger für den Empfang von Impulsen umfassenden gepulsten Systems, das im Betrieb insbesondere umfeldbedingten Einflussgrößen ausgesetzt ist, mit Mitteln (10) zur Simulation wenigstes einer Einflussgröße einschließlich variabler Einstellmittel (12, 14) zur Einstellung unterschiedlicher Werte der Einflussgröße, und Mitteln zum Speichern der eingestellten unterschiedlichen Werte der Einflussgröße sowie der sich für diese ergebenden, mittels des Empfängers gemessen Empfangswerte, insbesondere zur Durchführung des Verfahrens nach einem der vorhergehenden Ansprüche,
**dadurch gekennzeichnet,**
**dass** zur Einstellung der unterschiedlichen Werte der Einflussgröße die Einflussgröße über die variablen Einstellmittel (12, 14) jeweils nur soweit verstellt wird, bis ein jeweiliger Wert der Einflussgröße einem vorgebbaren Wert der Einflussgröße innerhalb einer vorgebbaren Toleranz entspricht, und dass eine insbesondere elektronische Auswerteeinrichtung vorgesehen ist, um den vorgebbaren Werten der Einflussgröße entsprechende Empfangswerte durch Interpolation der mittels des Empfängers gemessenen Empfangswerte entlang der eingestellten Werte der Einflussgrößen zu ermitteln.

24. Vorrichtung nach Anspruch 23,
**dadurch gekennzeichnet,**
**dass** zumindest zwei unterschiedliche Einflussgrößen simuliert werden.

25. Vorrichtung nach Anspruch 24,
**dadurch gekennzeichnet,**
**dass** zur Einstellung der unterschiedlichen Werte der beiden Einflussgrößen die Werte dieser Einflussgrößen über die variablen Einstellmittel (12, 14) jeweils nur soweit verstellt werden, bis ein jeweiliger Wert einer ersten der beiden Einflussgrößen einem vorgebbaren Wert dieser ersten Einflussgröße innerhalb einer vorgebbaren Toleranz bzw. ein jeweiliger Wert der zweiten Einflussgröße einem vorgebbaren Wert dieser zweiten Einflussgröße innerhalb einer vorgebbaren Toleranz entspricht, und dass die Auswerteeinrichtung den vorgebbaren Werten der beiden Einflussgrößen entsprechende Empfangswerte durch Interpolation der mittels des Empfänger gemessenen Empfangswerte entlang der eingestellten Werte der ersten Einflussgröße und entlang der eingestellten Werte der zweiten Einflussgröße ermittelt.

26. Vorrichtung nach einem der Ansprüche 23 bis 25,
**dadurch gekennzeichnet,**
**dass** durch die Interpolation Empfangswerte für äquidistante Werte einer jeweiligen Einflussgröße ermittelt werden.

27. Vorrichtung nach einem der Ansprüche 23 bis 26,
**dadurch gekennzeichnet,**
**dass** die Interpolation in Form einer Kubische-Spline-Interpolation erfolgt.

28. Vorrichtung nach einem der Ansprüche 23 bis 27,
**dadurch gekennzeichnet,**
**dass** im Fall der Simulation zweier Einflussgrößen die Interpolation in Form einer zweidimensionalen Interpolation erfolgt.

29. Vorrichtung nach einem der Ansprüche 23 bis 28,
**dadurch gekennzeichnet,**
**dass** die Interpolation entlang der eingestellten Werte einer jeweiligen Einflussgröße ausgehend von einem definierten Anfangswert der Einflussgröße erfolgt.

30. Vorrichtung nach einem der Ansprüche 23 bis 29,
**dadurch gekennzeichnet,**
**dass** das zu kalibrierende gepulste System durch ein einen IR-Sensor (16) umfassendes Innenraumschutzsystem insbesondere für Fahrzeuge gebildet ist und über die variablen Einstellmittel (12, 14) zur Simulation von Innenraum-Reflexionsgraden und Hintergrund-Lichtintensitäten unterschiedliche Innenraum-Reflexionsgrade und unterschiedliche Hintergrund-Lichtintensitäten eingestellt und mittels des IR-Sensors (16) die sich für die eingestellten unterschiedlichen Innenraum-Reflexionsgrade und Hintergrund-Lichtintensitäten ergebenden Lichtempfangswerte gemessen werden, wobei zur Einstellung der unterschiedlichen Innenraum-Reflexionsgrade und Hintergrund-Lichtintensitäten die Innenraum-Reflexionsgrade und Hintergrund-Lichtintensitäten über die variablen Einstellmittel (12, 14) jeweils nur soweit verstellt werden, bis ein jeweiliger Innenraum-Reflexionsgrad einem vorgebbaren Innenraum-Reflexionsgrad innerhalb einer vorgebbaren Toleranz bzw. eine jeweilige Hintergrund-Lichtintensität einer vorgebbaren Hintergrund-Lichtintensität innerhalb einer vorgebbaren Toleranz entspricht, und den vorgebbaren Innenraum-Reflexionsgraden und Hintergrund-Lichtintensitäten entsprechende Lichtempfangswerte durch Interpolation der mittels des IR-Sensors (16) gemessenen Lichtempfangswerte entlang der eingestellten Innenraum-Reflexionsgrade und entlang der eingestellten Hintergrund-Lichtintensitäten ermittelt werden.

31. Vorrichtung nach Anspruch 30,
**dadurch gekennzeichnet,**
**dass** durch die Interpolation Lichtempfangswerte für äquidistante Innenraum-Reflexionsgrade und äquidistante Hintergrund-Lichtintensitäten ermittelt werden.

32. Vorrichtung nach Anspruch 30 oder 31,
**dadurch gekennzeichnet,**
**dass** die Interpolation in Form einer Kubische-Spline-Interpolation erfolgt.

33. Vorrichtung nach einem der Ansprüche 30 bis 32,
**dadurch gekennzeichnet,**
**dass** die Interpolation in Form einer zweidimensionalen Interpolation erfolgt.

34. Vorrichtung nach einem der Ansprüche 30 bis 33,
**dadurch gekennzeichnet,**
**dass** zunächst entlang der eingestellten Hintergrund-Lichtintensitäten und anschließend entlang der eingestellten Innenraum-Reflexionsgrade interpoliert wird.

35. Vorrichtung nach einem der Ansprüche 30 bis 34,
**dadurch gekennzeichnet,**
**dass** die Interpolation entlang der eingestellten Innenraum-Reflexionsgrade ausgehend von einem definierten Anfangs-Innenraum-Reflexionsgrad erfolgt.

36. Vorrichtung nach einem der Ansprüche 30 bis 35,
**dadurch gekennzeichnet,**
**dass** die Interpolation entlang der eingestellten Hintergrund-Lichtintensitäten ausgehend von einer definierten Anfangs-Hintergrund-Lichtintensität erfolgt.

## Claims

1. Method for calibrating a pulsed system comprising a transmitter for transmitting pulses and a receiver for receiving pulses, which in operation is exposed in particular to environmental influencing variables, wherein for simulation of at least one influencing variable different values of the influencing variable are adjusted through variable adjusting means (12, 14) and, using the receiver, the receiving values, resulting for the adjusted different values of the influencing variable, are measured,
**characterized in that**
for adjusting the different values of the influencing variable the influencing variable is adjusted respectively through the variable adjusting means (12, 14) only as far as a respective value of the influencing variable corresponds to a predeterminable value of the influencing variable within a predeterminable tolerance, and **in that** the receiving values, corresponding to the predeterminable values of the influencing variable, are determined through interpolation of the receiving values, measured using the receiver, along the adjusted values of the influencing variable.

2. Method according to claim 1,
**characterized in that**
at least two different influencing variables are simulated.

3. Method according to claim 2,
**characterized in that**
for adjustment of the different values of the two influencing variables the values of these influencing variables are adjusted through the variable adjusting means respectively only as far as a respective value of a first one of the two influencing variables corresponds to a predeterminable value of this first influencing variable within a predeterminable tolerance and a respective value of the second influencing variable corresponds to a predeterminable value of this second influencing variable within a predeterminable tolerance, respectively, and **in that** receiving values, corresponding to the predeterminable values of the two influencing variables, are determined through interpolation of the receiving values, measured using the receiver, along the adjusted values of the first influencing variable and along the adjusted values of the second influencing variable.

4. Method according to one of the preceding claims,
**characterized in that**
receiving values are determined for equidistant values of a respective influencing variable using the interpolation.

5. Method according to one of the preceding claims,
**characterized in that**
the interpolation is performed in form of a cubic spline interpolation.

6. Method according to one of the preceding claims,
**characterized in that**
in the case of the simulation of two influencing variables the interpolation is performed in form of a two-dimensional interpolation.

7. Method according to one of the preceding claims,
**characterized in that**
the interpolation is performed along the adjusted values of a respective influencing variable based on a defined initial value of the influencing variable.

8. Method according to one of the preceding claims,
**characterized in that**
the adjusted values of a respective influencing variable are at least buffered.

9. Method according to claim 8,
**characterized in that**
the receiving values corresponding to the adjusted values of a respective influencing variable measured using the receiver are at least buffered.

10. Method according to one of the preceding claims,
**characterized in that**
the interpolation is performed on the basis of the buffered adjusted values of a respective influencing variable and the corresponding buffered receiving values measured using the receiver.

11. Method according to one of the preceding claims,
**characterized in that**
the pulsed system to be calibrated is formed by an interior protection system, in particular for vehicles, including an IR sensor (16) and, using the variable adjusting means (12, 14), different interior degrees of reflection and different background light intensities are adjusted for simulation of interior degrees of reflection and background light intensities, and using the IR sensor (16) the light receiving values are measured resulting for the adjusted different interior degrees of reflection and background light intensities, wherein for adjustment of the different interior degrees of reflection and background light intensities, the interior degrees of reflection and background light intensities are adjusted through the variable adjusting means (12, 14) only as far as a respective interior degree of reflection corresponds to a predeterminable interior degree of reflection within a predeterminable tolerance and a respective background light intensity corresponds to a predeterminable background light intensity within a predeterminable tolerance, respectively, and light receiving values corresponding to the predeterminable interior degrees of reflection and background light intensities are determined through interpolation of the light receiving values measured using the IR sensor (16) along the adjusted interior degrees of reflection and along the adjusted background light intensities.

12. Method according to claim 11,
**characterized in that**
light receiving values are determined for equidistant interior degrees of reflection and equidistant background light intensities using the interpolation.

13. Method according to claim 11 or 12,
**characterized in that**
the interpolation is performed in form of a cubic spline interpolation.

14. Method according to one of the claims 11 to 13,
**characterized in that**
the interpolation is performed in form of a two-dimensional interpolation.

15. Method according to one of the claims 11 to 14,
**characterized in that**
first it is interpolated along the adjusted background light intensities and subsequent along the adjusted interior degrees of reflection.

16. Method according to one of the claims 11 to 15,
**characterized in that**
the interpolation is performed along the adjusted interior degrees of reflection based on a defined initial interior degree of reflection.

17. Method according to one of the claims 11 to 16,
**characterized in that**
the interpolation is performed along the adjusted background light intensities based on a defined initial background light intensity.

18. Method according to one of the claims 11 to 17,
**characterized in that**
the adjusted interior degrees of reflection are at least buffered.

19. Method according to claim 18,
**characterized in that**
the light receiving values corresponding to the adjusted interior degrees of reflection measured using the IR sensor (16) are at least buffered.

20. Method according to one of the preceding claims,
**characterized in that**
the adjusted background light intensities are at least buffered.

21. Method according to claim 20,
**characterized in that**
the light receiving values corresponding to the adjusted background light intensities measured using the IR sensor are at least buffered.

22. Method according to one of the claims 11 to 21,
**characterized in that**
the interpolation is performed on the basis of the buffered adjusted interior degrees of reflection and background light intensities and the corresponding buffered light receiving values measured using the IR sensor (16).

23. Device for calibrating a pulsed system comprising a transmitter for transmitting pulses and a receiver for receiving pulses, which in operation is exposed to in particular environmental influencing variables, comprising means (10) for simulation of at least one influencing variable including variable adjusting means (12, 14) for adjusting different values of the influencing variable, and means for storing the adjusted different values of the influencing variable and the resulting receiving values, measured using the receiver, in particular for performing the method according to one of the preceding claims,
**characterized in that**
for adjusting the different values of the influencing variable the influencing variable is adjusted through the variable adjusting means (12, 14) only as far as a respective value of the influencing variable corresponds to a predeterminable value of the influencing variable within a predeterminable tolerance, and **in that** an electronic evaluation device in particular is provided to determine receiving values corresponding to the predeterminable values of the influencing variable through interpolation of the receiving values measured using the receiver along the adjusted values of the influencing variables.

24. Device according to claim 23,
**characterized in that**
at least two different influencing variables are simulated.

25. Device according to claim 24,
**characterized in that**
for adjustment of the different values of the two influencing variables the values of these influencing variables are adjusted through the variable adjusting means (12, 14) respectively only as far as a respective value of a first one of the two influencing variables corresponds to a predeterminable value of this first influencing variable within a predeterminable tolerance and a respective value of the second influencing variable corresponds to a predeterminable value of this second influencing variable within a predeterminable tolerance, respectively, and **in that** the evaluation device determines receiving values, corresponding to the predeterminable values of the two influencing variables, through interpolation of the receiving values, measured using the receiver, along the adjusted values of the first influencing variable and along the adjusted values of the second influencing variable.

26. Device according to one of the claims 23 to 25,
**characterized in that**
receiving values are determined for equidistant values of a respective influencing variable using the interpolation.

27. Device according to one of the claims 23 to 26,
**characterized in that**
the interpolation is performed in form of a cubic spline interpolation.

28. Device according to one of the claims 23 to 27,
**characterized in that**
in the case of the simulation of two influencing variables the interpolation is performed in form of a two-dimensional interpolation.

29. Device according to one of the claims 23 to 28,
**characterized in that**
the interpolation is performed along the adjusted values of a respective influencing variable based on a defined initial value of the influencing variable.

30. Device according to one of the claims 23 to 29,
**characterized in that**
the pulsed system to be calibrated is formed by an interior protection system, in particular for vehicles, including an IR sensor (16) and, using the variable adjusting means (12, 14), different interior degrees of reflection and different background light intensities are adjusted for simulation of interior degrees of reflection and background light intensities, and using the IR sensor (16) the light receiving values are measured resulting for the adjusted different interior degrees of reflection and background light intensities, wherein for adjustment of the different interior degrees of reflection and background light intensities, the interior degrees of reflection and background light intensities are adjusted through the variable adjusting means (12, 14) only as far as a respective interior degree of reflection corresponds to a predeterminable interior degree of reflection within a predeterminable tolerance and a respective background light intensity corresponds to a predeterminable background light intensity within a predeterminable tolerance, respectively, and light receiving values corresponding to the predeterminable interior degrees of reflection and background light intensities are determined through interpolation of the light receiving values measured using the IR sensor (16) along the adjusted interior degrees of reflection and along the adjusted background light intensities.

31. Device according to claim 30,
**characterized in that**
light receiving values are determined for equidistant interior degrees of reflection and equidistant background light intensities using the interpolation.

32. Device according to claim 30 or 31,
**characterized in that**
the interpolation is performed in form of a cubic spline interpolation.

33. Device according to one of the claims 30 to 32,
**characterized in that**
the interpolation is performed in form of a two-dimensional interpolation.

34. Device according to one of the claims 30 to 33,
**characterized in that**
first it is interpolated along the adjusted background light intensities and subsequent along the adjusted interior degrees of reflection.

35. Device according to one of the claims 30 to 34,
**characterized in that**
the interpolation is performed along the adjusted interior degrees of reflection based on a defined initial interior degree of reflection.

36. Device according to one of the claims 30 to 35,
**characterized in that**
the interpolation is performed along the adjusted background light intensities based on a defined initial background light intensity.

## Revendications

1. Procédé pour le calibrage d'un système pulsé comprenant un émetteur pour émettre des impulsions et un récepteur pour recevoir des impulsions, qui est exposé en fonctionnement à des grandeurs d'influence en particulier conditionnées par l'environnement, dans lequel pour la simulation d'au moins une grandeur d'influence on règle différentes valeurs pour ladite grandeur d'influence via des moyens de réglage variables (12, 14) et on mesure au moyen du récepteur les valeurs reçues qui résultent pour les différentes valeurs réglées de la grandeur d'influence,
**caractérisé en ce que**
pour régler les différentes valeurs de la grandeur d'influence, la grandeur d'influence est modifiée via les moyens de réglage variables (12, 14) à chaque fois seulement jusqu'à ce qu'une valeur respective de la grandeur d'influence corresponde à une valeur prédéterminée de la grandeur d'influence à l'intérieur d'une tolérance prédéterminée, et **en ce que** des valeurs reçues correspondant aux valeurs prédéterminées de la grandeur d'influence sont déterminées par interpolation des valeurs reçues, mesurées au moyen du récepteur, le long des valeurs réglées de la grandeur d'influence.

2. Procédé selon la revendication 1,
**caractérisé en ce que** l'on simule au moins deux grandeurs d'influence différentes.

3. Procédé selon la revendication 2,
**caractérisé en ce que** pour régler les valeurs différentes des deux grandeurs d'influence, les valeurs de ces grandeurs d'influence sont modifiées, via les moyens de réglage variables, à chaque fois seulement jusqu'à ce qu'une valeur respective de l'une des deux grandeurs d'influence corresponde à une valeur prédéterminée de cette première valeur d'influence à l'intérieur d'une tolérance prédéterminée ou jusqu'à ce qu'une valeur respective de la seconde grandeur d'influence corresponde à une valeur prédéterminée de cette seconde grandeur d'influence à l'intérieur d'une tolérance prédéterminée, et **en ce que** des valeurs reçues, correspondant aux valeurs prédéterminées des deux grandeurs d'influence, sont déterminées par interpolation des valeurs reçues mesurées au moyen du récepteur le long des valeurs réglées de la première grandeur d'influence et le long des valeurs réglées de la seconde grandeur d'influence.

4. Procédé selon l'une des revendications précédentes,
**caractérisé en ce que** grâce à l'interpolation on détermine des valeurs reçues pour des valeurs équidistantes d'une grandeur d'influence respective.

5. Procédé selon l'une des revendications précédentes,
**caractérisé en ce que** l'interpolation a lieu sous la forme d'une interpolation spline cubique.

6. Procédé selon l'une des revendications précédentes,
**caractérisé en ce que,** dans le cas de la simulation de deux grandeurs d'influence, l'interpolation a lieu sous la forme d'une interpolation bidimensionnelle.

7. Procédé selon l'une des revendications précédentes,
**caractérisé en ce que** l'interpolation le long des valeurs réglées d'une grandeur d'influence respective a lieu en partant d'une valeur initiale définie de la grandeur d'influence.

8. Procédé selon l'une des revendications précédentes,
**caractérisé en ce que** les valeurs réglées d'une grandeur d'influence respective sont mémorisées au moins de façon intermédiaire.

9. Procédé selon la revendication 8,
**caractérisé en ce que** les valeurs reçues mesurées au moyen du récepteur et correspondant aux valeurs réglées d'une grandeur d'influence respective sont mémorisées au moins de façon intermédiaire.

10. Procédé selon l'une des revendications précédentes,
**caractérisé en ce que** l'interpolation a lieu en se basant sur les valeurs réglées mémorisées de façon intermédiaire d'une grandeur d'influence respective et sur les valeurs reçues correspondant à celles-ci, mesurées au moyen du récepteur et mémorisées de façon intermédiaire.

11. Procédé selon l'une des revendications précédentes,
**caractérisé en ce que** le système pulsé à calibrer est formé par un système de protection d'habitacle comprenant un capteur infrarouge (16), en particulier pour véhicule automobile, et via les moyens de réglage variables (12, 14) pour la simulation de degrés de réflexion d'habitacle et d'intensités lumineuses d'arrière-plan on règle différents degrés de réflexion d'habitacle et différentes intensités lumineuses d'arrière-plan et on mesure au moyen du capteur infrarouge (16) les valeurs de réception lumineuse résultant des différents degrés de réflexion d'habitacle réglés et des différentes intensités lumineuses d'arrière-plan réglées, dans lequel pour le réglage des différents degrés de réflexion d'habitacle et des différentes intensités lumineuses d'arrière-plan, les degrés de réflexion d'habitacle et les intensités lumineuses d'arrière-plan sont modifié(e)s via les moyens de réglage variables (12, 14) à chaque fois uniquement jusqu'à ce qu'un degré de réflexion d'habitacle respectif corresponde à un degré de réflexion d'habitacle prédéterminé à l'intérieur d'une tolérance prédéterminée ou qu'une intensité lumineuse d'arrière-plan respective corresponde à une intensité lumineuse d'arrière-plan prédéterminée à l'intérieur d'une tolérance prédéterminée, et des valeurs de réception lumineuse correspondant aux degrés de réflexion d'habitacle prédéterminés et aux intensités lumineuses d'arrière-plan prédéterminées sont déterminées par interpolation des valeurs de réception lumineuse mesurées au moyen du capteur infrarouge (16) le long des degrés de réflexion d'habitacle réglés et le long des intensités lumineuses d'arrière-plan réglées.

12. Procédé selon la revendication 11,
**caractérisé en ce que** grâce à l'interpolation, on détermine des valeurs de réception lumineuse pour des degrés de réflexion d'habitacle équidistants et des intensités lumineuses d'arrière-plan équidistantes.

13. Procédé selon la revendication 11 ou 12,
**caractérisé en ce que** l'interpolation a lieu sous la forme d'une interpolation spline cubique.

14. Procédé selon l'une des revendications 11 à 13,
**caractérisé en ce que** l'interpolation a lieu sous la forme d'une interpolation bidimensionnelle.

15. Procédé selon l'une des revendications 11 à 14,
**caractérisé en ce que** l'on interpole tout d'abord le long des intensités lumineuses d'arrière-plan réglées et ensuite le long des degrés de réflexion d'habitacle réglés.

16. Procédé selon l'une des revendications 11 à 15,
**caractérisé en ce que** l'interpolation le long des degrés de réflexion d'habitacle réglés a lieu en partant d'un degré de réflexion d'habitacle initial défini.

17. Procédé selon l'une des revendications 11 à 16,
**caractérisé en ce que** l'interpolation le long des intensités lumineuses d'arrière-plan réglées a lieu en partant d'une intensité lumineuse d'arrière-plan initial définie.

18. Procédé selon l'une des revendications 11 à 17,
**caractérisé en ce que** les degrés de réflexion d'habitacle réglés sont mémorisés au moins de façon intermédiaire.

19. Procédé selon la revendication 18,
**caractérisé en ce que** les valeurs de réception lumineuse mesurées au moyen du capteur infrarouge (16) et correspondant aux degrés de réflexion d'habitacle réglés sont mémorisées au moins de façon intermédiaire.

20. Procédé selon l'une des revendications précédentes,
**caractérisé en ce que** les intensités lumineuses d'arrière-plan réglées sont mémorisées au moins de façon intermédiaire.

21. Procédé selon la revendication 20,
**caractérisé en ce que** les valeurs de réception lumineuse mesurées au moyen du capteur infrarouge et correspondant aux intensités lumineuses d'arrière-plan réglées sont mémorisées au moins de façon intermédiaire.

22. Procédé selon l'une des revendications 11 à 21,
**caractérisé en ce que** l'interpolation a lieu en se basant sur les degrés de réflexion d'habitacle réglés mémorisés de façon intermédiaire et les intensités lumineuses d'arrière-plan réglées mémorisées de façon intermédiaire, et sur les valeurs de réception lumineuse correspondant à celles-ci, mesurées au moyen du capteur infrarouge (16) et mémorisées de façon intermédiaire.

23. Appareil pour le calibrage d'un système pulsé comprenant un émetteur pour émettre des impulsions et un récepteur pour recevoir des impulsions, qui est exposé en fonctionnement à des grandeurs d'influence en particulier conditionnées par l'environnement, comprenant des moyens (10) pour la simulation d'au moins une grandeur d'influence y-compris des moyens de réglage variables (12, 14) pour le réglage de différentes valeurs pour ladite grandeur d'influence, et des moyens pour mémoriser les différentes valeurs réglées de la grandeur d'influence ainsi que les valeurs reçues, mesurées au moyen du récepteur et résultant pour celles-ci, en particulier pour mettre en oeuvre le procédé selon l'une des revendications précédentes,
**caractérisé en ce que**
pour régler les différentes valeurs de la grandeur d'influence, la grandeur d'influence est modifiée via les moyens de réglage variables (12, 14) à chaque fois seulement jusqu'à ce qu'une valeur respective de la grandeur d'influence corresponde à une valeur prédéterminée de la grandeur d'influence à l'intérieur d'une tolérance prédéterminée, et **en ce qu'**il est prévu une unité d'évaluation, en particulier électronique, pour déterminer des valeurs reçues correspondant aux valeurs prédéterminées de la grandeur d'influence par interpolation des valeurs reçues, mesurées au moyen du récepteur, le long des valeurs réglées des grandeurs d'influence.

24. Appareil selon la revendication 23,
**caractérisé en ce qu'**au moins deux grandeurs d'influences différentes sont simulées.

25. Appareil selon la revendication 24,
**caractérisé en ce que** pour régler les valeurs différentes des deux grandeurs d'influence, les valeurs de ces grandeurs d'influence sont modifiées, via les moyens de réglage variables, à chaque fois seulement jusqu'à ce qu'une valeur respective de l'une des deux grandeurs d'influence corresponde à une valeur prédéterminée de cette première valeur d'influence à l'intérieur d'une tolérance prédéterminée ou jusqu'à ce qu'une valeur respective de la seconde grandeur d'influence corresponde à une valeur prédéterminée de cette seconde grandeur d'influence à l'intérieur d'une tolérance prédéterminée, et **en ce que** l'unité d'évaluation détermine des valeurs reçues, correspondant aux valeurs prédéterminées des deux grandeurs d'influence, par interpolation des valeurs reçues mesurées au moyen du récepteur le long des valeurs réglées de la première grandeur d'influence et le long des valeurs réglées de la seconde grandeur d'influence.

26. Appareil selon l'une des revendications 23 à 25,
**caractérisé en ce que** des valeurs reçues pour des valeurs équidistantes d'une grandeur d'influence respective sont déterminées par l'interpolation.

27. Appareil selon l'une des revendications 23 à 26,
**caractérisé en ce que** l'interpolation a lieu sous la forme d'une interpolation spline cubique.

28. Appareil selon l'une des revendications 23 à 27,
**caractérisé en ce que,** dans le cas de la simulation de deux grandeurs d'influence, l'interpolation a lieu sous la forme d'une interpolation bidimensionnelle.

29. Appareil selon l'une des revendications 23 à 28,
**caractérisé en ce que** l'interpolation le long des valeurs réglées d'une grandeur d'influence respective a lieu en partant d'une valeur initiale définie de la grandeur d'influence.

30. Appareil selon l'une des revendications 23 à 29,
**caractérisé en ce que** le système pulsé à calibrer est formé par un système de protection d'habitacle comprenant un capteur infrarouge (16), en particulier pour véhicule automobile, et via les moyens de réglage variables (12, 14) pour la simulation de degrés de réflexion d'habitacle et d'intensités lumineuses d'arrière-plan on règle différents degrés de réflexion d'habitacle et différentes intensités lumineuses d'arrière-plan et on mesure au moyen du capteur infrarouge (16) les valeurs de réception lumineuse résultant des différents degrés de réflexion d'habitacle réglés et des différentes intensités lumineuses d'arrière-plan réglées, dans lequel pour le réglage des différents degrés de réflexion d'habitacle et des différentes intensités lumineuses d'arrière-plan, les degrés de réflexion d'habitacle et les intensités lumineuses d'arrière-plan sont modifié(e)s via les moyens de réglage variables (12, 14) à chaque fois uniquement jusqu'à ce qu'un degré de réflexion d'habitacle respectif corresponde à un degré de réflexion d'habitacle prédéterminé à l'intérieur d'une tolérance prédéterminée ou qu'une intensité lumineuse d'arrière-plan respective corresponde à une intensité lumineuse d'arrière-plan prédéterminée à l'intérieur d'une tolérance prédéterminée, et des valeurs de réception lumineuse correspondant aux degrés de réflexion d'habitacle prédéterminés et aux intensités lumineuses d'arrière-plan prédéterminées sont déterminées par interpolation des valeurs de réception lumineuse mesurées au moyen du capteur infrarouge (16) le long des degrés de réflexion d'habitacle réglés et le long des intensités lumineuses d'arrière-plan réglées.

31. Appareil selon la revendication 30,
**caractérisé en ce que** grâce à l'interpolation, on détermine des valeurs de réception lumineuse pour des degrés de réflexion d'habitacle équidistants et des intensités lumineuses d'arrière-plan équidistantes.

32. Appareil selon la revendication 30 ou 31,
**caractérisé en ce que** l'interpolation a lieu sous la forme d'une interpolation spline cubique.

33. Appareil selon l'une des revendications 30 à 32,
**caractérisé en ce que** l'interpolation a lieu sous la forme d'une interpolation bidimensionnelle.

34. Appareil selon l'une des revendications 30 à 33,
**caractérisé en ce que** l'on interpole tout d'abord le long des intensités lumineuses d'arrière-plan réglées et ensuite le long des degrés de réflexion d'habitacle réglés.

35. Appareil selon l'une des revendications 30 à 34,
**caractérisé en ce que** l'interpolation le long des degrés de réflexion d'habitacle réglés a lieu en partant d'un degré de réflexion d'habitacle initial défini.

36. Appareil selon l'une des revendications 30 à 35,
**caractérisé en ce que** l'interpolation le long des intensités lumineuses d'arrière-plan réglées a lieu en partant d'une intensité lumineuse d'arrière-plan initial définie.
